(19) Europäisches Patentamt
European Patent Office
Office européen des brevets

(11) **EP 4 506 601 A1**

(12) **EUROPÄISCHE PATENTANMELDUNG**

(43) Veröffentlichungstag:
**12.02.2025 Patentblatt 2025/07**

(21) Anmeldenummer: **24187584.8**

(22) Anmeldetag: **10.07.2024**

(51) Internationale Patentklassifikation (IPC):
**F16K 31/04** *(2006.01)* **F16K 31/05** *(2006.01)*
**F16K 37/00** *(2006.01)*

(52) Gemeinsame Patentklassifikation (CPC):
**F16K 31/043; F16K 3/08; F16K 31/055;
F16K 37/005**

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**GE KH MA MD TN**

(30) Priorität: **09.08.2023 DE 102023121290**

(71) Anmelder: **Judo Wasseraufbereitung GmbH
71364 Winnenden (DE)**

(72) Erfinder:
• **BROCKE, Sebastian
71522 Backnang (DE)**
• **Massa, Eckard
71720 Oberstenfeld-Gronau (DE)**
• **Barth, Jakob
71522 Backnang (DE)**

(74) Vertreter: **Kohler Schmid Möbus Patentanwälte
Partnerschaftsgesellschaft mbB
Gropiusplatz 10
70563 Stuttgart (DE)**

(54) **WASSERSCHADENSCHUTZVORRICHTUNG MIT NOTENTRIEGELUNG**

(57) Eine Wasserschadenschutzvorrichtung zum automatischen Verschließen einer Leitung, umfassend
- ein Anschlussstück mit einem Zulauf, einem Ablauf und einem Ventil mit einem drehbaren Verschlussteil,
- einen Stellmotor, mit dem das drehbare Verschlussteil drehbar ist,
- eine elektronische Steuereinrichtung, die in Abhängigkeit von Messsignalen wenigstens eines Sensors Steuersignale für den Stellmotor erzeugt, ist, wobei die Wasserschadenschutzvorrichtung weiterhin ein manuelles Stellorgan zum manuellen Drehen des Verschlussteils umfasst,
dass eine Stellmotorwelle über eine Kopplungsvorrichtung (10) mit einer Verschlussteilwelle gekoppelt ist,
wobei die Kopplungsvorrichtung (10) so ausgebildet ist,
dass bei Drehung der der Stellmotorwelle in eine erste Drehrichtung (ED) die Stellmotorwelle mittels wenigstens eines ersten Anschlags formschlüssig mit der Verschlussteilwelle koppelt und die Verschlussteilwelle in die erste Drehrichtung (ED) mitnimmt,
und wobei die Kopplungsvorrichtung (10) weiterhin so ausgebildet ist, dass ausgehend von dem wenigstens einen ersten Anschlag die Verschlussteilwelle in der ersten Drehrichtung (ED) zumindest über einen Spielwinkelbereich (S) gegenüber der Stellmotorwelle drehbar ist. Mit der Wasserschadenschutzvorrichtung kann im Notfall ohne Stromversorgung ein geschlossenes Ventil einfach, schnell und sicher geöffnet werden.

Fig. 6

**Beschreibung**

Die Erfindung betrifft eine Wasserschadenschutzvorrichtung zum automatischen Verschließen einer Leitung für den Transport eines flüssigen Mediums, umfassend

- ein Anschlussstück mit einem Zulauf, einem Ablauf und einem Ventil mit einem drehbaren Verschlussteil, wobei mit dem drehbaren Verschlussteil eine Verbindung zwischen dem Zulauf und dem Ablauf für das flüssige Medium geöffnet und geschlossen werden kann,
- einen Stellmotor, mit dem das drehbare Verschlussteil in Abhängigkeit von Steuersignalen motorisch drehbar ist,
- eine elektronische Steuereinrichtung, die in Abhängigkeit von Messsignalen wenigstens eines Sensors Steuersignale für den Stellmotor erzeugt.

Eine solche Wasserschadenschutzvorrichtung ist beispielsweise bekannt geworden durch die "Einbau- und Betriebsanleitung JUDO ZEWA i-SAFE Mikroleckageschutz-System ¾" -1¼"", Version 2022/10, der Judo Wasseraufbereitung GmbH, Winnenden, DE.

Wasserschadenschutzvorrichtungen dienen dazu, einen unerwünschten Wasseraustritt in einer nachfolgenden Wasserinstallation zu erkennen und zu unterbinden. Eine typische Wasserschadenschutzvorrichtung wird mit einem Anschlussstück in eine wasserführende Leitung, beispielsweise in die Leitung des Trinkwassernetzes in einem Gebäude, eingebaut. Im Anschlussstück ist ein Ventil (auch Absperrventil genannt) verbaut, das mit einem Stellmotor gemäß den Steuersignalen einer elektronischen Steuereinrichtung geöffnet und geschlossen werden kann. Das Ventil verfügt meist über ein drehbares Verschlussteil. Mittels eines Sensors wird erkannt, ob ein unerwünschter Wasseraustritt in der nachfolgenden Wasserinstallation vorliegt, und falls ja, wird mit dem Stellmotor das Ventil geschlossen. Damit wird der unerwünschte Wasseraustritt gestoppt.

Beispielsweise wird die Wasserschadenschutzvorrichtung vor einem zentralen Wasserfilter in die Trinkwasserleitung eines Gebäudes verbaut, und ein Feuchtigkeitssensor überwacht den Boden unterhalb des Wasserfilters. Wenn mit dem Sensor Feuchtigkeit festgestellt wird, ist anzunehmen, dass der Wasserfilter undicht ist und Wasser auf den Boden fließt. In einem anderen Beispiel kann mit einem Durchflusssensor in der Leitung festgestellt werden, wenn ein sehr großer Wasserfluss vorliegt, der auf einen Rohrleitungsbruch hindeutet, und die Steuereinrichtung kann dann die Leitung absperren.

Ein unerwünschter Wasseraustritt wird typischerweise dadurch erkannt, dass ein vorgebbarer Grenzwert für die Messsignale eines Sensors überschritten oder unterschritten wird. Beispiele für entsprechende Wasserschadenschutzvorrichtungen sind aus der EP 3 786 603 B1, der EP 3 848 690 B1 und der DE 20 2022 104 097 U1 bekannt geworden.

Mittels des Stellmotors kann grundsätzlich auch ein geschlossenes Ventil wieder geöffnet werden, um die Wasserversorgung in der nachfolgenden Wasserinstallation wiederherzustellen, beispielsweise wenn das Leck in der nachfolgenden Wasserinstallation repariert wurde.

Es gibt jedoch Notsituationen, in denen ein geschlossenes Ventil einer Wasserschadenschutzvorrichtung schnell geöffnet werden sollte, jedoch aufgrund eines Stromausfalls das Ventil nicht mehr über eine Betätigung des Stellmotors geöffnet werden kann. Beispielhaft für eine solche Notsituation ist der Ausbruch eines Feuers in einem Gebäude, durch welches zunächst die nachfolgende Wasserinstallation beschädigt wurde (was zu einem automatischen Schließen des Ventils der Wasserschadenschutzvorrichtung führt), und durch welches dann auch die elektrische Stromversorgung im Gebäude ausfällt. Durch das geschlossene Ventil der Wasserschadenschutzvorrichtung werden dann Löschmaßnahmen im Gebäude erschwert, beispielsweise wenn Löschwasser hinter dem Ventil gezapft werden soll. Für solche Notsituationen kann für die Wasserschadenschutzvorrichtung eine manuelle Notentriegelung (also manuelle Öffnung/Notöffnung des geschlossenen Ventils) eingerichtet werden.

Beim eingangs erwähnten JUDO ZEWA i-SAFE ist vorgesehen, für eine Notöffnung des Absperrventils zunächst eine Verkleidung des Leckageschutz-Systems abzunehmen und anschließend einen Motorarretierstift zu ziehen. Sodann kann der gesamte Motor des Leckageschutz-Systems um 90° gedreht werden, wodurch das Absperrventil geöffnet wird.

Durch die Betriebsanleitung "Bedienung und Wartung SafeTech Connect Leckageschutz - SYR Haustechnik mit System", Hans Sasserath GmbH & Co. KG, Korschenbroich, DE, Version 19.06.2019, ist es bekannt geworden, im Notfall bei dem dort beschriebenen Leckageschutz-Gerät zunächst vom Gehäuse ein Batteriefach und eine äußere Schale abzunehmen, sodann einen im Gehäuse gelagerten Not-Auf-Schlüssel, eine Batterie und einen Batteriehalter zu entnehmen, und sodann das Gehäuse nach oben abzunehmen und zur Seite zu kippen. Anschließend muss eine Verbindungsklammer abgezogen und der Motor des Leckageschutz-Geräts abgenommen werden, wodurch eine Absperrung (bzw. ein Kopplungsende eines drehbaren Verschlussteils des Absperrventils) zugänglich wird. Darauf wird der Not-Auf-Schlüssel aufgesetzt und gedreht, bis wieder Wasser fließt.

Aus die Firmendruckschrift "Sicherheitseinrichtung protectliQ:A Betriebsanleitung", Grünbeck Wasseraufbereitung GmbH, Höchstädt an der Donau, DE, Version Mai 2022, ist es bekannt geworden, eine Sicherheitseinrichtung zum Schutz vor Wasserschäden mit einem Ventil umfassend einen Kugelhahn, einen batteriebetriebenen Motor zur automatischen Betätigung des Kugelhahns, einen Wassersensor und einem Handhebel auszubilden. Wenn mit dem Wassersensor am Boden Wasser erkannt wird, wird der Kugelhahn automatisch geschlossen. Ebenso wird der Kugelhahn automatisch geschlossen, wenn die Energie der Batterien zur Neige geht. Um dann bei leeren Batterien weiterhin einen Wasserzulauf zu gewährleisten, kann das Ventil manuell geöffnet werden. Hierzu muss eine Entriegelungstaste gedrückt und gehalten werden, und der Handhebel kräftig um 90° gedreht werden.

Diese bekannten Notentriegelungen sind vergleichsweise schwierig zu bedienen, was in einer Notsituation die Bereitstellung von Wasser, insbesondere Löschwasser, in der nachfolgenden Wasserinstallation verzögern kann und so Gefahrensituationen herbeiführen oder verschärfen kann.

Aufgabe der Erfindung

Es ist Aufgabe der Erfindung, eine Wasserschadenschutzvorrichtung bereitzustellen, mit der im Notfall ohne Stromversorgung ein geschlossenes Ventil einfach, schnell und sicher geöffnet werden kann.

Beschreibung der Erfindung

Diese Aufgabe wird erfindungsgemäß gelöst durch eine Wasserschadenschutzvorrichtung der eingangs genannten Art, die dadurch gekennzeichnet ist,

dass die Wasserschadenschutzvorrichtung weiterhin ein manuelles Stellorgan zum manuellen Drehen des Verschlussteils umfasst,
dass eine Welle des Stellmotors, im Folgenden Stellmotorwelle genannt, über eine Kopplungsvorrichtung mit einer Welle des Verschlussteils, im Folgenden Verschlussteilwelle genannt, gekoppelt ist,
wobei die Kopplungsvorrichtung so ausgebildet ist, dass bei Drehung der der Stellmotorwelle in eine erste Drehrichtung die Stellmotorwelle mittels wenigstens eines ersten Anschlags formschlüssig mit der Verschlussteilwelle koppelt und die Verschlussteilwelle in die erste Drehrichtung mitnimmt,
und wobei die Kopplungsvorrichtung weiterhin so ausgebildet ist, dass aus-gehend von dem wenigstens einen ersten Anschlag die Verschlussteilwelle in der ersten Drehrichtung zumindest über einen Spielwinkelbereich S gegenüber der Stellmotorwelle drehbar ist,
und dass der Spielwinkelbereich S so bemessen ist, dass das Ventil mittels des manuellen Stellorgans von einem vollständig geschlossen Zustand in einen zumindest teilweise geöffneten Zustand überführt werden kann.

Bei der erfindungsgemäßen Wasserschadenschutzvorrichtung ist im Notfall eine Öffnung des Ventils mittels des manuellen Stellorgans (etwa ein Handrad oder ein Handhebel) eingerichtet, mit dem das Verschlussteil manuell gedreht werden kann. Das manuelle Stellorgan ist dazu dauerhaft mit dem drehbaren Verschlussteil gekoppelt.

Um bei stillstehendem Stellmotor, und entsprechend stillstehender Stellmotorwelle, eine Drehung des Verschlussteils mittels des manuellen Stellorgans nicht durch den Stellmotor zu behindern, ist die Kopplungsvorrichtung in besonderer Weise ausgebildet. Diese Kopplungsvorrichtung richtet dauerhaft eine Kopplung zwischen der Stellmotorwelle und der Verschlussteilwelle ein; hierfür sind die Stellmotorwelle (oder an dieser befestigte Teile) und die Verschlussteilwelle (oder an dieser befestigte Teile) in einem dauerhaften gegenseitigen Eingriff. Die Kopplungseinrichtung bewirkt bei Drehung der Stellmotorwelle (gegenüber dem Anschlussstück) in die erste Drehrichtung die Mitnahme der Verschlussteilwelle in die erste Drehrichtung (und damit die Betätigung des Drehventils) durch wenigstens einen ersten gegenseitigen Anschlag im Formschluss. Die Kopplungsvorrichtung weist gleichzeitig ein Spiel zwischen der Stellmotorwelle und der Verschlussteilwelle auf. Das Spiel, entsprechend einem Winkelbereich der spielbedingt möglichen freien Drehung der Verschlussteilwelle gegenüber der Stellmotorwelle, wird auch Spielwinkelbereich genannt, hier auch bezeichnet mit S. Dieses Spiel gestattet es, mit dem manuellen Verschlussorgan das Verschlussteil und damit die Verschlussteilwelle gegenüber der Stellmotorwelle ausgehend von dem ersten Anschlag in die erste Drehrichtung weiter zu drehen, ohne dass sich dafür die Stellmotorwelle gegenüber dem Stellmotor (bzw. gegenüber dem Anschlussstück) bewegen muss.

Je nach Bauform der Kopplungsvorrichtung kann der durch die Kopplungsvorrichtung eingerichtete Spielwinkelbereich "endlich" sein (Spielwinkelbereich S im engeren Sinn, mit 0°<S<360°, meist S≤270°, und oft S ca. 90° oder S ca. 180°), oder auch "unendlich" sein (also ein beliebig weites Weiterdrehen gestattend, auch über mehrere/beliebig viele Vollumdrehungen, "freies" Weiterdrehen mit einem "Freilauf", siehe unten).

Der eingerichtete Spielwinkelbereich reicht aus, um das Ventil im Rahmen des Spiels mit dem manuellen Verschlussorgan ausgehend von einem vollständig geschlossenen Zustand in einen zumindest teilweise geöffneten Zustand zu überführen, der ausreicht, um eine (provisorische) Wasserversorgung in der nachfolgenden Wasserinstallation sicherzustellen, etwa zur Bereitstellung von Löschwasser. Man beachte, dass der für eine ausreichende Öffnung notwendige Spielwinkelbereich von der Geometrie des Verschlussteils (insbesondere seinem Durchgangskanal/Durchgangsöffnung) bestimmt wird, und der zur Verfügung stehende Spielwinkelbereich über die Bauform der Kopplungsvorrichtung (etwa die Größe und Position von Vorsprüngen und Rücksprüngen, siehe unten) eingerichtet werden kann. Bevorzugt reicht der Spielwinkelbereich aus, um das Ventil mittels des manuellen Stellorgans von einem vollständig geschlossen Zustand in einen vollständig geöffneten Zustand zu überführen.

Aufgrund der Kopplungsvorrichtung ist dann die (zumindest teilweise) Öffnung des Ventils mit dem manuellen Stellorgan einfach möglich, und erfordert weder besonderes Werkzeug, noch eine Öffnung von Gehäusen, noch eine Demontage von Bauteilen, und auch keine vorbereitende manuelle Betätigung einer Auskoppelungsmechanik, um das Ventil manuell umstellen zu können. Die Notöffnung ist erfindungsgemäß leicht möglich, ohne dass der Stellmotor (oder auch nur die Stellmotorwelle) mitgedreht werden müsste, und ohne dass an der Kopplungsvorrichtung (oder anderswo) eine vorbereitende Auskopplung erfolgen müsste.

Im Rahmen der manuellen Notöffnung (auch bezeichnet als Notentriegelung) kann das Ventil auch bei Stromausfall nach einem vorhergehenden Schließen wieder geöffnet werden, insbesondere für eine Entnahme von Löschwasser im Brandfall. Im Rahmen der Erfindung kann die Notöffnung wegen des eingerichteten (endlichen oder unendlichen) Spiels ohne nennenswerten Kraftaufwand und ohne Gefahr einer Beschädigung des Stellmotors oder anderer Bauteile der Wasserschadenschutzvorrichtung erfolgen.

Die Stellmotorwelle könnte ausgehend von dem wenigstens einen ersten Anschlag in eine zweite Drehrichtung, die der ersten Drehrichtung entgegengesetzt ist, zumindest über den Spielwinkelbereich gegenüber der Verschlussteilwelle gedreht werden. In der Praxis stehen aber bei der Notfallöffnung des Ventils typischerweise der Stellmotor bzw. die (vom Stellmotor blockierte) Stellmotorwelle still, wobei zunächst das Verschlussteil am ersten Anschlag zur Stellmotorwelle in einer geschlossenen Stellung steht; die Verschlussteilwelle bzw. das Verschlussteil wird dann für die Notfallöffnung des Ventils mit dem manuellen Stellorgan in der ersten Drehrichtung weitergedreht.

Die erste Drehrichtung (und die zweite Drehrichtung) werden relativ zur Wasserschadenschutzvorrichtung bzw. relativ zum (fest verbauten) Anschlussstück, beispielsweise in Aufsicht von der Seite der Stellmotorwelle, bestimmt.

Die Stellmotorwelle und die Verschlussteilwelle sind typischerweise koaxial angeordnet.

Das Verschlussteil ist typischerweise als Kugel, Scheibe oder Zylinder ausgebildet. Als Sensor oder Sensoren können insbesondere Volumenstromsensoren und/oder Feuchtigkeitssensoren, insbesondere Bodensensoren, und/oder Drucksensoren vorgesehen sein.

Bevorzugte Ausführungsformen der Erfindung

In einer bevorzugten Ausführungsform der erfindungsgemäßen Wasserschadenschutzvorrichtung ist vorgesehen,

dass die Kopplungsvorrichtung einen motorseitigen Träger, der mit der Stellmotorwelle starr verbunden ist, und einen ventilseitigen Träger, der mit der Verschlussteilwelle starr verbunden ist, aufweist, dass an einem der Träger wenigstens ein radialer oder axialer Vorsprung und am anderen der Träger wenigstens ein radialer oder axialer Rücksprung ausgebildet ist, die ineinander greifen und dadurch den wenigstens einen ersten Anschlag sowie wenigstens einen zweiten Anschlag ausbilden, wobei durch den wenigstens einen ersten Anschlag und den wenigstens einen zweiten Anschlag der Spielwinkelbereich S eingerichtet ist. Diese Ausführungsform ist sowohl baulich einfach, als auch einfach in der Handhabung. Insbesondere kann über den wenigstens einen, zweiten Anschlag für einen Bediener leicht die angestrebte (zumindest teilweise und bevorzugt vollständig) geöffnete Ventilposition aufgesucht werden. In dieser Ausführungsform ist ein "endlicher" Spielwinkelbereich eingerichtet. Eine jeweilige Paarung von wenigstens einem Vorsprung und wenigstens einem Rücksprung, die ineinander greifen, bildet jeweils einen ersten Anschlag und einen zweiten Anschlag aus; oft sind mehrere solche Paarungen (z.B. jeweils von zwei Vorsprüngen und einem Rücksprung) eingerichtet, so dass es mehrere erste Anschläge und mehrere zweite Anschläge gibt. Ein erster Anschlag und ein zweiter Anschlag blockieren eine jeweilige Paarung von Vorsprüngen und Rücksprüngen in Umfangsrichtung; zwischen den Anschlägen kann im Rahmen der Notöffnung eine manuelle Drehung der Verschlussteilwelle gegenüber der (blockierten) Stellmotorwelle erfolgen, entsprechend dem Spielwinkelbereich. Die Stellmotorwelle könnte ausgehend von dem wenigstens einen ersten Anschlag auch in die zweite Drehrichtung, die der ersten Drehrichtung entgegengesetzt ist, gegenüber einer (ruhenden) Verschlussteilwelle bis zu dem wenigstens einen zweiten Anschlag gedreht werden, entsprechend dem Spielwinkelbereich. Die Ausführungsform ist typischerweise bezüglich der Drehrichtungen funktional symmetrisch, so dass eine Betätigung des Ventils mittels den Stellmotors in jede Drehrichtung der Stellmotorwelle als gewählte erste Drehrichtung unter Mitnahme der Verschlussteilwelle im sich ergebenden ersten Anschlag bis in eine geschlossene Ventilstellung möglich ist, und von dort ausgehend das Verschlussteil in die gewählte erste Drehrichtung ausgehend vom ersten Anschlag manuell weitergedreht werden kann. Die Träger können insbesondere scheibenförmig ausgebildet sein. Vorsprünge können beispielsweise durch von den Trägern abstehende Mitnehmer ausgebildet werden, beispielsweise ausgebildet als in den Träger eingeschraubte Bolzen. Man beachte, dass die Vorsprünge und Rücksprünge funktional jeweils eine Erstreckung in Umfangsrichtung aufweisen, durch die der Spielwinkelbereich bestimmt wird.

Bevorzugt ist eine Weiterbildung dieser Ausführungsform, bei der an einem der Träger wenigstens zwei Vorsprünge und am anderen der Träger wenigstens zwei Rücksprünge ausgebildet sind, die ineinander greifen. Die Vorsprünge und Rücksprünge sind typischerweise in Umfangsrichtung gleichmäßig verteilt. Dadurch kann eine stabile Kopplung und eine ausgewogene Kraftverteilung erreicht werden. Es ist auch möglich, (jeweils) zwei Vorsprünge in einen gegenüberliegenden Rücksprung eingreifen zu lassen, wodurch sich der Spielwinkelbereich besonders einfach einstellen lässt. Es sei zudem angemerkt, dass zwischen zwei Vorsprüngen stets ein Rücksprung zugeordnet werden kann und umgekehrt, sodass die Perspektive für die Zuordnung von Vorsprüngen und Rücksprüngen zu den beiden Trägern im Ermessen des Betrachters liegt.

Vorteilhaft ist eine Weiterbildung, bei der die Vorsprünge und/oder Rücksprünge als axiale Vorsprünge und/oder Rücksprünge ausgebildet sind. Dies erlaubt eine vergleichsweise einfache Fertigung und einen kompakten Bau der Kopplungsvorrichtung.

In einer alternativen Ausführungsform ist die Kopplungsvorrichtung mit einem Freilauf ausgebildet, der bei einer Drehung der Stellmotorwelle durch den Stellmotor in die erste Drehrichtung koppelt, und bei einer Drehung der Verschlussteilwelle mittels des manuellen Stellorgans in der ersten Drehrichtung freiläuft. Mit dem Freilauf kann über ein gut erhältliches Standardbauteil (Freilauf, auch genannt Freilaufkupplung) die für die Notöffnung gewünschte freie Drehbarkeit der Verschlussteilwelle gegenüber der (blockierten) Stellmotorwelle in die erste Drehrichtung eingerichtet werden. Der Freilauf kann beispielsweise mittels einer in radialer Richtung federbelasteten Klinke (oder Klinken) eingerichtet werden. In dieser Ausführungsform ist ein "unendlicher" Spielwinkelbereich eingerichtet. Eine ausreichend geöffnete Position der Verschlussteilwelle kann beispielsweise mittels zwei Markierungen einerseits am Verschlussteil (oder der Verschlussteilwelle) und der Stellmotorwelle, die vom Bediener durch Weiterdrehen der Verschlussteilwelle in die erste Drehrichtung in Übereinstimmung gebracht werden, aufgesucht werden; die Kupplungsvorrichtung dreht dabei "im Freilauf". Alternativ kann der Bediener auch einfach den Wasserfluss durch die Leitung beim Weiterdrehen der Verschlussteilwelle in die erste Drehrichtung mit dem manuellen Stellorgan beobachten, nötigenfalls durch Öffnen einer nahegelegenen Zapfstelle in der nachgeordneten Wasserinstallation (zB ein Wasserhahn). Würde der Bediener versuchen (ausgehend vom ersten Anschlag) die Verschlussteilwelle in die zweite Drehrichtung zu drehen (also entgegen der ersten Drehrichtung), würde der Freilauf koppeln, und die Verschlussteilwelle würde durch die blockierte Stellmotorwelle ebenfalls blockiert. Würde (ausgehend vom ersten Anschlag) die Stellmotorwelle in die zweite Drehrichtung, die der ersten Drehrichtung entgegengesetzt ist, gedreht, würde die Kopplungsvorrichtung (bei ruhender Verschlussteilwelle) freilaufen.

Bei einer bevorzugten Ausführungsform ist vorgesehen, dass der Stellmotor und das manuelle Stellorgan an gegenüberliegenden Seiten des Anschlussstücks am Verschlussteil angreifen. Dieser Aufbau ist besonders einfach. Der Aufbau kommt insbesondere mit wenigen Kraftübertragungselementen vom Stellmotor und vom manuellen Stellorgan auf das drehbare Verschlussteil aus. Bevorzugt erfolgt die Anbindung des manuellen Stellorgans getriebelos, was besonders kostengünstig und robust ist.

Alternativ kann in einer ebenfalls bevorzugten Ausführungsform auch vorgesehen sein, dass der Stellmotor und das manuelle Stellorgan an der gleichen Seite des Anschlussstücks am Verschlussteil angreifen, insbesondere wobei der Stellmotor und das manuelle Stellorgan beide an der Verschlussteilwelle angreifen. Dieser Aufbau benötigt Bauraum nur auf einer Seite der Leitung bzw. des Anschlussstücks, was in vielen Einbausituationen günstig ist. Der gemeinsame Angriff an der Verschlussteilwelle kann baulich kompakt eingerichtet werden. Die Verschlussteilwelle wird dann als "gemeinsame Spindel" für das Verschlussteil genutzt. In dieser Ausführungsform liegen eine Stellorganspindel und die Verschlussteilwelle oft nebeneinander und parallel zueinander.

Bei einer Weiterbildung dieser Ausführungsform weist das manuelle Stellorgan eine Stellorganspindel auf, die über ein Zahnradgetriebe, insbesondere ein Stirnradgetriebe, mit der Verschlussteilwelle gekoppelt ist. Dies ist baulich einfach möglich. Über das Zahnradgetriebe kann auch ein ausreichender Abstand des manuellen Stellorgans zum Stellmotor eingerichtet werden sodass der Stellmotor die Betätigung des manuellen Stellorgans nicht nennenswert behindert. Über das Zahnradgetriebe kann, falls gewünscht, eine Übersetzung eingerichtet werden, beispielsweise eine Untersetzung, mit der die Betätigung des manuellen Stellorgans erleichtert wird.

Besonders bevorzugt ist eine Ausführungsform, bei der das manuelle Stellorgan starr oder im Wesentlichen spielfrei mit dem Verschlussteil gekoppelt ist. Die starre Kopplung ist stets spielfrei und besonders einfach einzurichten. Eine im Wesentlichen spielfreie Kopplung ist beispielsweise über ein Zahnradgetriebe (bei beidseitigem Kontakt der Zahnflanken einer Zahnlücke zum eingreifenden Zahn) leicht möglich. Ein etwaiges verbleibendes Spiel einer Kopplung des manuellen Stellorgans mit dem Verschlussteil ist typischerweise um einen Faktor 10 oder mehr, typischerweise einen Faktor 20 oder mehr, kleiner als ein (endlicher) Spielwinkelbereich oder ein Öffnungswinkel (Umstellwinkel) zwischen vollständig geschlossener und vollständig geöffneter Drehstellung des Ventils.

Bevorzugt ist eine Ausführungsform, die vorsieht, dass durch die Kopplungsvorrichtung der Spielwinkelbereich S eingerichtet ist mit

$$0,5*\alpha < S < 1,5*\alpha,$$

mit Öffnungswinkel $\alpha$ des Verschlussteils, wobei der Öffnungswinkel einen Drehwinkel des Verschlussteils entspricht, mit dem das Ventil von einem vollständig geschlossenen Zustand in einen vollständig geöffneten Zustand überführt werden kann. Der Öffnungswinkel $\alpha$ des Verschlussteils (hier auch genannt Umstellwinkel) hängt von der Größe, Geometrie und Position eines Durchgangskanals (oder Durchgangsöffnung) im Verschlussteil ab, über den der Zulauf mit dem Ablauf verbunden werden kann. Der (hier endliche) Spielwinkelbereich S sollte ungefähr so groß wie der Öffnungswinkel $\alpha$ sein. Dann wird ein (maximales) Weiterdrehen des Verschlussorgans im Rahmen des Spiels ausgehend vom ersten Anschlag zu einer zumindest partiellen, weitgehenden Öffnung des Ventils führen; mit $\alpha=S$ kann am zweiten Anschlag (siehe oben) eine vollständige Öffnung des Ventils erreicht werden.

Bevorzugt ist eine Weiterbildung dieser Ausführungsform, die vorsieht, dass das Verschlussteil ausgebildet ist mit einer Ventilkugel mit einem zentralen Durchgangskanal,

und dass $45°\leq S\leq135°$,
insbesondere wobei $80°\leq S\leq100°$. Dadurch kann ein robustes und gut zu kontrollierendes Ventil eingerichtet werden. Der zentrale Durchgangskanal kann leicht mit einem Öffnungswinkel $\alpha=90°$ (oder auch $80°\leq\alpha\leq100°$) ausgebildet werden, insbesondere wenn der Durchmesser des Durchgangskanals dem Leitungsdurchmesser im Bereich des Zulaufs und des Ablaufs entspricht.

In einer alternativen, ebenfalls bevorzugten Weiterbildung der obigen Ausführungsform ist vorgesehen, dass das Verschlussteil ausgebildet ist mit einer Verschlussscheibe oder einem Verschlusszylinder mit einem dezentralem Durchgangskanal,

und dass $90°\leq S\leq270°$,
insbesondere wobei $165°\leq S\leq195°$. Dadurch kann ein besonders einfach zu fertigendes, und ebenfalls gut zu kontrollierendes Ventil eingerichtet werden. Der dezentrale Durchgangskanal kann leicht mit einem Öffnungswinkel $\alpha=180°$ (oder auch $165°\leq\alpha\leq195°$) ausgebildet werden, insbesondere indem der Durchgangskanal sich über den halben Vollwinkel der Verschlussscheibe oder des Verschlusszylinders erstreckt.

Vorteilhaft ist weiterhin eine Ausführungsform, bei der das manuelle Stellorgan eine Stellorganspindel mit einem Drehbetätiger, insbesondere einem Handrad oder Handhebel, umfasst, wobei der Drehbetätiger außerhalb eines Gehäuses der Wasserschadenschutzvorrichtung angeordnet ist. Dadurch wird eine einfach Konstruktion mit guter Zugänglichkeit des manuellen Stellorgans für eine Betätigung durch einen Bediener erreicht. Insbesondere braucht für die Notöffnung das Gehäuse nicht eröffnet zu werden.

Bevorzugt ist zudem eine Ausführungsform, die vorsieht,

dass der Sensor einen Volumenstromsensor, der einen Volumenstrom des flüssigen Mediums durch das Anschlussstück misst, und/oder einen Feuchtigkeitssensor umfasst,
und dass die Steuereinrichtung im Falle eines Überschreitens oder Unterschreitens eines vorgegebenen Grenzwerts für das Messsignal des Sensors das Ventil schließt,
insbesondere wobei die Steuereinrichtung das Ventil schließt, wenn eine elektrische Leitfähigkeit in der Umgebung des Sensors einen Grenzwert überschreitet und/oder oder der elektrische Widerstand in der Umgebung des Sensors einen Grenzwert unterschreitet und/oder ein absoluter momentaner Volumenstrom des flüssigen Mediums einen Grenzwert überschreitet und/oder eine Zeitdauer eines ununterbrochenen Mindestvolumenstroms des flüssigen Mediums einen Grenzwert überschreitet und/oder ein akkumuliertes Volumen des flüssigen Mediums innerhalb eines vorgegebenen Zeitraums einen Grenzwert überschreitet. Dadurch lassen sich die häufigsten Wasserschadensereignisse auf einfache Weise erkennen und absichern. Der Feuchtigkeitssensor wird typischerweise am Boden eines überwachten Zimmers oder am Boden einer Auffangwanne angeordnet.

In den Rahmen der vorliegenden Erfindung fällt auch ein Verfahren zum Betrieb einer erfindungsgemäßen, oben beschriebenen Wasserschadenschutzvorrichtung, die dadurch gekennzeichnet ist,
dass nachdem die Steuereinrichtung aufgrund von Messsignalen des Sensors ein Schließen des Ventils durch den Stellmotor durchgeführt hat, wobei der Stellmotor mittels der Kopplungsvorrichtung das Verschlussteil in die erste Drehrichtung gedreht hat, das Ventil wieder manuell geöffnet wird, indem mit dem manuellen Stellorgan das Verschlussteil in die erste Drehrichtung weitergedreht wird, wobei die Stellmotorwelle und die Verschlussteilwelle über die Kopplungsvorrichtung gekoppelt bleiben und die Stellmotorwelle stillsteht. Die manuelle Öffnung erfordert keinen elektrischen Strom, und bleibt somit auch in Notfällen, in denen kein Strom mehr zur Verfügung steht, möglich. Die Notöffnung ist einfach, schnell und sicher möglich, und erfordert keine besonderen Kenntnisse und auch kein besonderes Geschick beim Bediener.

Weitere Vorteile der Erfindung ergeben sich aus der Beschreibung und der Zeichnung. Ebenso können die vorstehend genannten und die noch weiter ausgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Detaillierte Beschreibung der Erfindung und Zeichnung

Fig. 1    zeigt schematisch einen Querschnitt durch eine erste Ausführungsform einer erfindungsgemäße Wasserschadenschutzvorrichtung im Bereich des Anschlussstücks und des Stellmotors, mit dem Stellmotor und dem manuellen Stellorgan an gegenüberliegenden Seiten des Anschlussstücks;

Fig. 2    zeigt schematisch die Kopplungsvorrichtung der Wasserschadenschutzvorrichtung von Fig. 1 in einer perspektivischen Ansicht;

Fig. 3    zeigt schematisch den motorseitigen Träger der Kopplungsvorrichtung von Fig. 2 in einer perspektivischen Ansicht;

Fig. 4    zeigt schematisch den ventilseitigen Träger der Kopplungsvorrichtung von Fig. 2 in einer perspektivischen Ansicht;

Fig. 5    zeigt schematisch einen Querschnitt durch die Kopplungsvorrichtung von Fig. 2, auf Höhe der Vorsprünge und Rücksprünge, in einer Stellung des Ventils nach dem Schließen durch den Stellmotor (geschlossene Ventilstellung);

Fig. 6    zeigt schematisch einen Querschnitt durch die Kopplungsvorrichtung von Fig. 2, auf Höhe der Vorsprünge und Rücksprünge, in einer Stellung des Ventils nach einem manuellen Öffnen durch den Bedienter (geöffnete Ventilstellung);

Fig. 7    zeigt schematisch einen Querschnitt durch eine Bauform einer Kopplungsvorrichtung für die Erfindung, umfassend einen Freilauf;

Fig. 8    zeigt schematisch einen Querschnitt durch eine zweite Ausführungsform einer erfindungsgemäße Wasserschadenschutzvorrichtung im Bereich des Anschlussstücks und des Stellmotors, mit dem Stellmotor und dem manuellen Stellorgan an der gleichen Seite des Anschlussstücks;

Fig. 9    zeigt schematisch eine Aufsicht auf eine Verschlussscheibe eines Ventils für die Erfindung;

Fig. 10    zeigt schematisch ein Anschlussschema einer erfindungsgemäßen Wasserschadenschutzvorrichtung in einer Wasserinstallation eines Gebäudes.

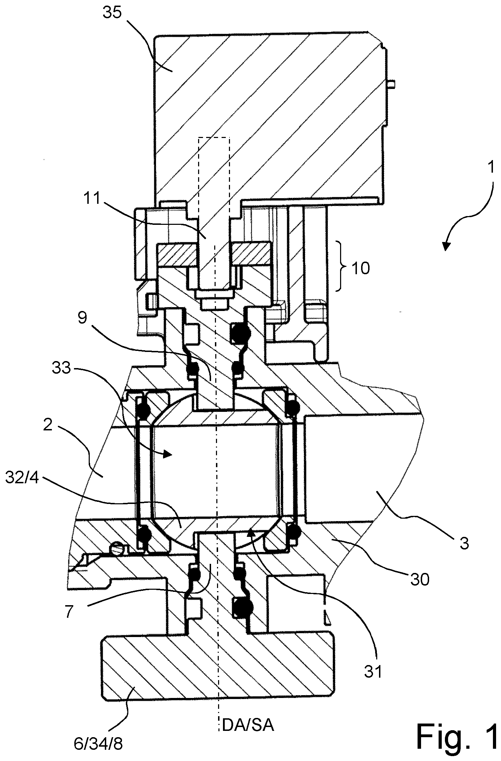

Die **Figur 1** illustriert eine erste Ausführungsform einer erfindungsgemäßen Wasserschadenschutzvorrichtung 1.

Die Wasserschadenschutzvorrichtung 1 umfasst ein Anschlussstück 30 mit einem Zulauf 2 für ein flüssiges Medium, hier Trinkwasser zur Versorgung eines Gebäudes, sowie einen Ablauf 3 für das flüssige Medium und ein Ventil 31. Das Ventil 31 weist ein drehbares Verschlussteil 32 auf, das um eine in der Figur vertikal verlaufende Drehachse DA drehbar ist. Das Verschlussteil 32 ist hier mit einer Ventilkugel 4 ausgebildet. Das Verschlussteil 32 weist einen Durchgangskanal 33 auf, der als Bohrung in der dargestellten Ausführungsform horizontal und zentral durch die Ventilkugel 4 verläuft.

Je nach Drehstellung des Verschlussteils 32 werden der Zulauf 2 und der Ablauf 3 über den Durchgangskanal 33 mit maximalem Leitungsquerschnitt miteinander verbunden (vollständig geöffnete Ventilstellung, in Fig. 1 dargestellt), mit reduziertem Leitungsquerschnitt miteinander verbunden (teilweise geöffnete Ventilstellung, nicht näher dargestellt) oder voneinander getrennt (vollständig geschlossene Ventilstellung, ebenfalls nicht näher dargestellt).

In der gezeigten Bauform hat das Verschlussteil 32 einen Öffnungswinkel (auch kurz mit $\alpha$ bezeichnet, aber nicht eingezeichnet) von ca. 90°. Der Öffnungswinkel bezeichnet die notwendige (kleinstmögliche) Drehung des Verschlussteils 32, um von einer vollständig geöffneten Ventilstellung in eine vollständig geschlossene Ventilstellung zu gelangen.

Das Verschlussteil 32 ist an seiner Unterseite über eine Stellorganspindel 7 drehfest mit einem manuellen Stellorgan 6 verbunden (und bevorzugt auch daran starr befestigt), wobei das manuelle Stellorgan 6 hier als Drehbetätiger 34 in Form eines Handrad 8 ausgebildet ist; alternativ wäre auch ein Handhebel als Drehbetätiger 34 möglich (nicht näher dargestellt). Wird das manuelle Stellorgan 6 von einem Bediener mit der Hand gedreht, so dreht sich entsprechend das Verschlussteil 32 mit (soweit die Drehung nicht durch den Stellmotor blockiert ist). Hierdurch wird eine einfache und schnelle manuelle Notöffnung des Ventils 31 ohne elektrischen Strom ermöglicht (mehr dazu unten).

Weiterhin weist das Verschlussteil 32 an seiner Oberseite eine Verschlussteilwelle 9 auf, die mit der Ventilkugel 4 drehfest verbunden ist (und bevorzugt auch daran starr befestigt ist). Die Verschlussteilwelle 9 ist über eine Kopplungsvorrichtung 10 dauerhaft an eine Stellmotorwelle 11 eines elektrischen Stellmotors 35 gekoppelt (siehe dazu weiter unten). Mittels des Stellmotors 35 kann die Stellmotorwelle 11 gedreht werden, soweit elektrischer Strom zur Verfügung steht, und dadurch kann auch das Verschlussteil 32 in eine gewünschte Drehstellung (und damit Ventilstellung) gedreht werden.

Das Verschlussteil 32, die Verschlussteilwelle 9 und die Stellorganspindel 7 sind in Anschlussstück 30 gelagert und geführt. Das manuelle Stellorgan 6 liegt außerhalb des Anschlussstücks 30 und außerhalb eines Gehäuses der Wasserschadenschutzvorrichtung (letzteres nicht näher dargestellt).

In der gezeigten Bauform sind das manuelle Stellorgan 6 und der Stellmotor 35 an gegenüberliegenden Seiten des Anschlussstücks 30 (in der Figur unterhalb und oberhalb des Anschlussstücks 30) angeordnet und greifen entsprechend von unterschiedlichen Seiten am Verschlussteil 32 an. Eine Stellorganachse SA, um die die Stellorganspindel 7 drehbar ist, und die Drehachse DA, um die die Verschlussteilwelle 9 und die Stellmotorwelle 11 (und das Verschlussteil 32) drehbar sind, fallen hier zusammen.

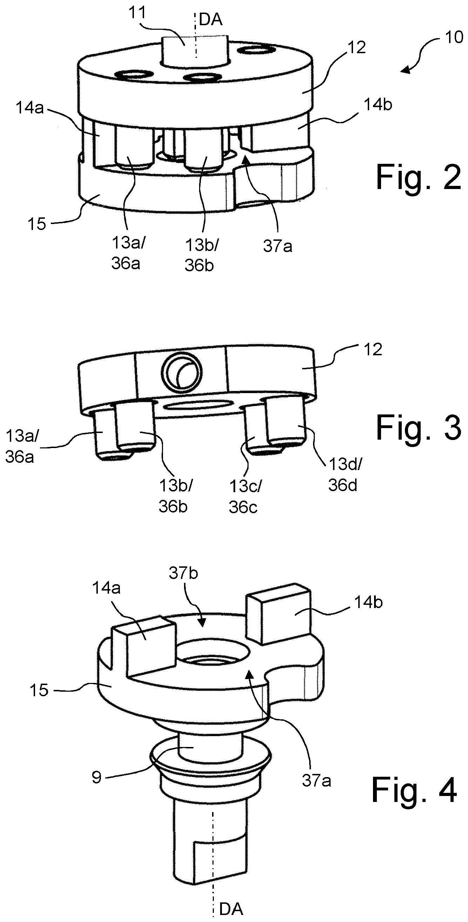

Die **Figuren 2, 3 und 4** erläutern die Kopplungsvorrichtung 10 von Fig. 1 näher.

Die Kopplungsvorrichtung 10 verfügt über einen motorseitigen Träger 12, der hier im Wesentlichen scheibenförmig ausgebildet ist und mit der Stellmotorwelle 11 starr drehfest verbunden ist, und entsprechend mit dieser zusammen um die Drehachse DA drehbar ist. Typischerweise ist der motorseitige Träger 12 auch starr an der Stellmotorwelle 11 befestigt. Am motorseitigen Träger 12 sind in der gezeigten Ausführungsform vier nach axial unten abstehende Vorsprünge 36a-36d ausgebildet. Die Vorsprünge 36a-36d werden dabei im gezeigten Beispiel durch Mitnehmer 13a-13d in Gestalt von in den motorseitigen Träger 12 eingeschraubte, runde Bolzen ausgebildet.

Weiterhin verfügt die Kopplungsvorrichtung über einen ventilseitigen Träger 15, der hier ebenfalls im Wesentlichen scheibenförmig ausgebildet ist und mit der Verschlussteilwelle 9 starr drehfest verbunden ist, und entsprechend mit dieser zusammen um die Drehachse DA drehbar ist. Typischerweise ist der ventilseitige Träger 15 auch starr an der Verschlussteilwelle 9 befestigt. Am ventilseitigen Träger 15 sind in der gezeigten Ausführungsform zwei nach axial oben abstehende Auskragungen 14a, 14b ausgebildet. Dadurch ergeben sich in Umfangsrichtung zwischen den Auskragungen 14a, 14b funktional zwei Rücksprünge 37a, 37b. Die Auskragungen 14a, 14b werden hier durch im Wesentlichen quaderförmige Blöcke gebildet, die einstückig mit dem ventilseitigen Träger 15 zusammenhängen.

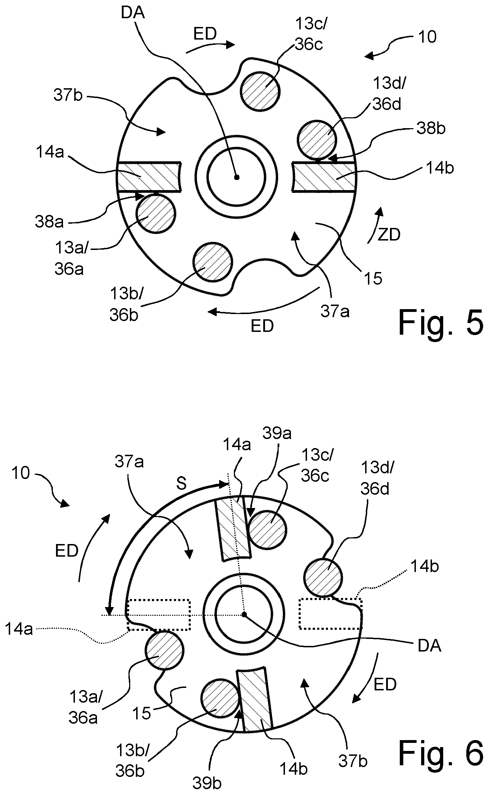

Die Vorsprünge 36a, 36b greifen in den Rücksprung 37a ein (siehe Fig. 2), und die Vorsprünge 36c, 36d greifen in den Rücksprung 37b ein (in Fig. 2 verdeckt, vgl. aber dazu auch Fig. 5, 6). Die in Umfangsrichtung liegenden Seiten der Vorsprünge 36a-36d und Rücksprünge 37a, 37b begrenzen entsprechend eine relative Drehung zwischen dem motorseitigen Träger 12 und dem ventilseitigen Träger 15 (siehe dazu Fig. 5, Fig. 6).

Die **Figur 5** zeigt einen Querschnitt durch die Kopplungsvorrichtung 10 senkrecht zur Drehachse DA auf Höhe der Vorsprünge 36a-36d und Rücksprünge 37a-37b, mit Sicht auf den ventilseitigen Träger 15.

In der in Fig. 5 gezeigten Situation wurde gerade mit dem Stellmotor der motorseitige Träger (zu dem die Mitnehmer 13a-13d bzw. die Vorsprünge 36a-36d gehören; der motorseitige Träger ist in Fig. 5 oberhalb der Zeichenebene) in der gezeigten ersten Drehrichtung ED bis in die gezeigte Drehstellung des motorseitigen Trägers verfahren. Dabei kam es zu einer gegenseitigen Anlage des Vorsprungs 36a an der Auskragung 14a, entsprechend einem ersten Anschlag 38a, und zu einer gegenseitigen Anlage des Vorsprungs 36d an der Auskragung 14b, entsprechend einem weiteren ersten Anschlag 38b. Die Vorsprünge 36a, 36d haben entsprechend die Auskragungen 14a, 14b in Richtung der ersten Drehrichtung ED im Formschluss vor sich her geschoben, wobei der ventilseitige Träger 15, die Verschlussteilwelle und das Verschlussteil mitgenommen wurden, und schließlich eine vollständig geschlossenen Stellung des Ventils erreicht wurde. Die in Fig. 5 erreichte Situation entspricht dem Zustand nach einem Verschließen des Ventils zur Vermeidung eines Wasserschadens, wie er über den Stellmotor eingestellt wird. Man beachte, dass der Stellmotor typischerweise einen Stellungssensor aufweist, um die in Fig. 5 gezeigte Stellung des motorseitigen Trägers bzw. der Vorsprünge 36a-36d einzustellen.

Wenn nun in einer Notsituation, in der kein Strom zur Betätigung des Stellmotors vorhanden ist, das Ventil ausgehend von der in Fig. 5 gezeigten Situation geöffnet werden soll, kann dies mit der Kopplungsvorrichtung 10 im Rahmen der Erfindung dadurch geschehen, dass mit dem manuellen Stellorgan das Verschlussteil einschließlich des ventilseitigen Trägers 15 in eine (zumindest weitgehend) geöffnete Ventilstellung gedreht wird.

Diese Drehung erfolgt ausgehend von der in Fig. 5 gezeigten Situation dergestalt, dass der ventilseitige Träger 15 einschließlich der Auskragungen 14a, 14b in der ersten Drehrichtung ED weitergedreht wird; der motorseitige Träger einschließlich der Vorsprünge 36a-36d bleibt in Ruhe (relativ zum Anschlussstück).

Die **Figur 6** zeigt nun die Kopplungsvorrichtung 10 in der Situation, nachdem mit dem manuellen Stellorgan der ventilseitige Träger 15 einschließlich seiner Auskragungen 14a, 14b in der ersten Drehrichtung ED maximal weitergedreht wurde und eine (zumindest weitgehend) geöffnete Ventilstellung erreicht wurde. Man beachte, dass in Fig. 6 die Auskragungen 14a, 14b des ventilseitigen Trägers 15 zusätzlich zum Vergleich auch in der vorhergehenden Stellung von Fig. 5 gezeigt sind (gestrichelte Liniendarstellung).

In der in Fig. 6 gezeigten Situation wird schließlich eine gegenseitige Anlage der Auskragung 14a und dem Vorsprung 36c erreicht, entsprechend einem zweiten Anschlag 39a. Ebenso wird eine gegenseitige Anlage der Auskragung 14b mit dem Vorsprung 36b erreicht, entsprechend einem weiteren zweiten Anschlag 39b.

Ausgehend von der in Fig. 5 gezeigten Stellung wurde der ventilseitige Träger 15 um einen Spielwinkelbereich S weitergedreht, der hier ca. 83° beträgt; das ist fast der Öffnungswinkel des Ventils (siehe oben bei Fig. 1), so dass dann das Ventil fast vollständig geöffnet ist (bevorzugt ist $S>0,5*\alpha$, bevorzugt $S\geq0,75*\alpha$). In der gezeigten Ausführungsform wird der eingerichtete Spielwinkelbereich S bestimmt durch die Erstreckung (Winkelerstreckung) eines jeweiligen Rücksprungs 37a oder 37b zwischen den Innenwänden der zugehörigen Auskragungen 14a, 14b und der Erstreckung (Winkelerstreckung) zwischen den Anschlägen 38a, 39b oder 38b, 39a der Vorsprünge 36a, 36b oder 36d, 36c, die in den jeweiligen Rücksprung 37a, 37b eintauchen.

Der ventilseitige Träger 15, und damit auch das drehbare Verschlussteil, kann innerhalb des Spielwinkelbereichs S frei (also ohne Behinderung durch die in Ruhe bleibende, blockierte Stellmotorwelle) gedreht werden. Der gegenseitige Eingriff der Vorsprünge 36a-36d und Rücksprünge 37a, 37b bleibt dabei erhalten; die dadurch eingerichtete Kopplung braucht nicht aufgehoben zu werden und wird im Rahmen der Erfindung auch nicht aufgehoben. Insbesondere erfolgt keinerlei (hier axiale) Bewegung von Teilen der Kopplungsvorrichtung 10 in der Richtung des (hier axial eingerichteten) gegenseitigen Eingriffs der Teile der Kopplungsvorrichtung, um für die Notöffnung eine zeitweise Auskopplung zu bewirken.

Es sei ergänzend angemerkt, dass ausgehend von der in Fig. 5 gezeigten Stellung der motorseitige Träger einschließlich der Vorsprünge 36a-36 in einer zweiten Drehrichtung ZD, die der ersten Drehrichtung ED entgegengesetzt ist, um den Spielwinkelbereich S gedreht werden könnte, ohne dass der ventilseitige Träger 15 einschließlich der Auskragungen 14a, 14b gedreht werden müsste.

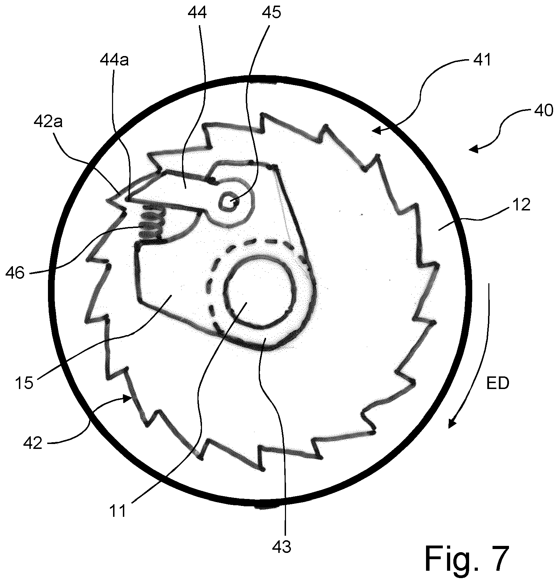

**Figur 7** zeigt eine alternative Bauform einer Kopplungsvorrichtung 40 für die Erfindung, die mit einem Freilauf 41 ausgebildet ist. Die Kopplungsvorrichtung kann analog zu dem Ausführungsbeispiel von Fig. 1-Fig. 6 an die übrige Wasserschadenschutzvorrichtung angebunden werden; es werden nur die wesentlichen Aspekte erläutert. Die Schnittansicht von Fig. 7 hat ihre Schnittebene auf Höhe der Verzahnung 42 des motorseitigen Trägers 12, und die Blickrichtung ist entlang der Drehachse auf den ventilseitigen Träger 15 zu.

Ein motorseitiger Träger 12 ist hier mit einer innenliegenden Verzahnung 42 ausgebildet und starr mit der Stellmotorwelle 11 verbunden. Der ventilseitige Träger 15 ist mit einem Rohrschaft 43 drehbar um die Stellmotorwelle 11 gelagert, und über den Rohrschaft 43 weiterhin in nicht näher dargestellter Weise starr mit der Verschlussteilwelle verbunden. Auf dem ventilseitigen Träger 15 ist eine Sperrklinke 44 gelagert, die um eine Achse 45 verschwenkbar ist. Die Sperrklinke 44 wird durch eine Feder 46 vorgespannt, hier in eine Richtung im Uhrzeigersinn um die Achse 45.

Wenn der motorseitige Träger 12 in der ersten Drehrichtung ED im Anschlussstück gedreht wird, so gleitet die Spitze 44a der Sperrklinke 44 in eine nächstgelegene Zahnlücke 42a der Verzahnung 42 ein und verkantet; es kommt zu einem gegenseitigen ersten Anschlag und einem Formschluss. Der motorseitige Träger 12 nimmt dann bei weiterer Drehung des motorseitigen Trägers 12 in der ersten Drehrichtung ED den ventilseitigen Träger 15 und damit das Verschlussteil mit.

Wird jedoch (ausgehend von der vorbesagten verkanteten Stellung, oder auch ausgehend von der in Fig. 7 gezeigten Stellung) der ventilseitige Träger 15 und damit auch das Verschlussteil in die erste Drehrichtung ED (bei ruhendem, blockiertem motorseitigen Träger 12) gedreht, so wird die Sperrklinke 44 von der Verzahnung 42 auf die Feder 46 zu gedrückt und dabei in radialer Richtung soweit eingedrückt, dass die Sperrklinke innen an der Verzahnung 42 abgleiten kann. Die Sperrklinke 44 schnappt jeweils nach Passieren eines Zahnes der Verzahnung 42 ein wenig radial nach außen zurück, verkantet dabei aber nicht, sondern gleitet weiter ab. Entsprechend kann sich der ventilseitige Träger 15 und damit das Verschlussteil in die erste Drehrichtung ED beliebig weit drehen, ohne dass dies vom motorseitigen Träger jemals blockiert würde ("freie" Drehbarkeit, mit einem "unendlichen" Spiel der Kopplungsvorrichtung 40 in der ersten Drehrichtung ED).

Man beachte, dass bei dieser Bauform typischerweise mit einem Stellungssensor (nicht näher dargestellt) die Drehstellung der Verschlussteilwelle oder eines anderen, mit dem Verschlussteil starr verbundenen Bauteils mitverfolgt wird, um mit dem Stellmotor eine gewünschte Drehstellung des Verschlussteils, und damit eine gewünschte Ventilstellung (insbesondere eine geschlossene Ventilstellung), einstellen zu können.

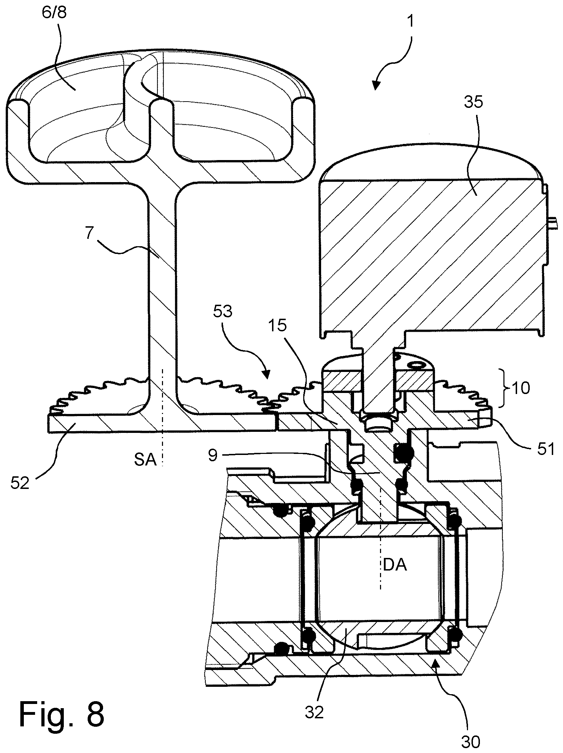

Die **Figur 8** zeigt eine zweite Ausführungsform einer erfindungsgemäßen Wasserschadenschutzvorrichtung 1 ähnlich wie in Fig. 1 dargestellt; es werden nachfolgend nur die wesentlichen Unterschiede erläutert.

Bei dieser Bauform sind das manuelle Stellorgan 6, hier ausgebildet als Handrad 8, und der Stellmotor 35 auf der gleichen Seite des Anschlussstücks 30 (in Fig. 8 oberhalb des Anschlussstücks 30) angeordnet, und greifen entsprechend auf der gleichen Seite am Verschlussteil 32 an.

An der Verschlussteilwelle 9 ist (hier) im Bereich des ventilseitigen Trägers 15 der Kopplungsvorrichtung 10 ein außenverzahntes erstes Zahnrad 51 angeordnet und starr mit der Verschlussteilwelle 9 verbunden. In dieses erste Zahnrad 51 greift in ein außenverzahntes zweites Zahnrad 52 ein, welches starr mit der Stellorganspindel 7 verbunden ist, an dem endseitig das Handrad 8 ausgebildet ist (man beachte, dass zur Vereinfachung die Lagerung des manuellen Stellorgans 6 und der damit verbundenen Teile nicht näher dargestellt ist). Die beiden Zahnräder 51, 52 bilden ein Zahnradgetriebe 53, hier ein Stirnradgetriebe, aus. Eine Stellorganachse SA, um die die Stellorganspindel 7 drehbar ist, und die Drehachse DA, um die die Verschlussteilwelle 9 drehbar ist, sind hier nebeneinander und parallel zueinander eingerichtet.

Über das manuelle Stellorgan 6 und das Zahnradgetriebe 53 kann somit eine manuelle Stellbewegung auf die Verschlussteilwelle 9 und somit das Verschlussteil 32 übertragen werden, um die Notöffnung zu bewirken. Ebenso kann mit dem Stellmotor 35 über die Kopplungsvorrichtung 10 eine motorisierte und automatische Stellbewegung auf die Verschlussteilwelle 9 übertragen werden.

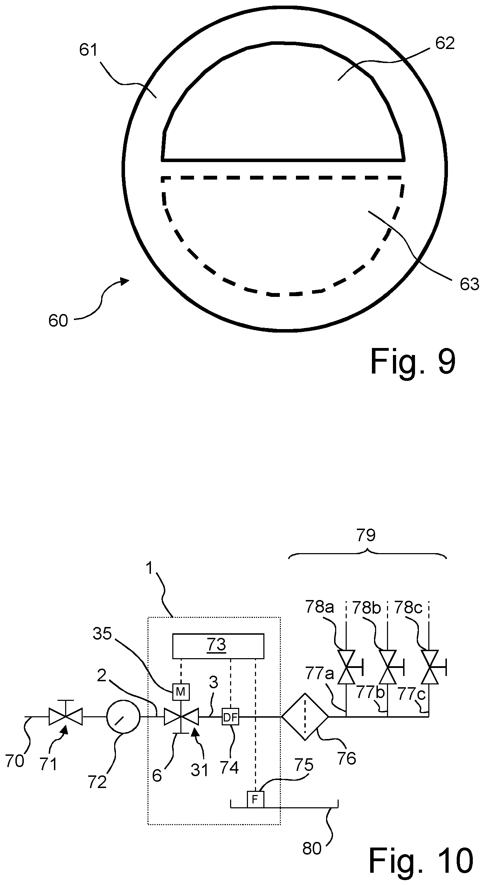

Die **Figur 9** zeigt eine alternative Bauform eines Verschlussteils 60 für die Erfindung. Das Verschlussteil 60 wird hier durch eine kreisrunde Verschlussscheibe 61 mit einem dezentralen Durchgangskanal 62 ausgebildet. Der Durchgangskanal ist hier im Querschnitt im Wesentlichen halbkreisscheibenförmig ausgebildet. Je nach Drehstellung der Verschlussscheibe 61 überlappt der Durchgangskanal 62 gar nicht (wie in Fig. 9 dargestellt), teilweise oder vollständig mit einer zugehörigen Gegenöffnung 63 (gestrichelt dargestellt) im Anschlussstück. Entsprechend ist ein Durchfluss für das flüssige Medium blockiert (wie in Fig. 9 gezeigt), teilweise oder vollständig geöffnet. Man beachte, dass der Öffnungswinkel (zum Überführen des Ventils von der vollständig geöffneten Stellung in die vollständig geschlossene Stellung) bei dieser Bauform ca. 180° beträgt.

**Figur 10** illustriert eine beispielhafte Einbausituation einer erfindungsgemäßen Wasserschadenschutzvorrichtung 1 in der Wasserinstallation eines Gebäudes.

Die Wasserschadenschutzvorrichtung 1 (gepunktet umrandet) ist hier zentral wirkend zwischen einer Wasseruhr 72 und einer nachfolgenden Wasserinstallation 79 verbaut.

Eine Übergabeleitung 70 für Trinkwasser an das Gebäude führt über einen Haupthahn 71 und die Wasseruhr 72 zum Zulauf 2 des Anschlussstücks (nicht näher dargestellt, vgl. aber Fig. 1), welches das Ventil 31 enthält. Dieses Ventil 31 kann erfindungsgemäß über das manuelle Stellorgan 6 oder den Stellmotor 35 betätigt werden (siehe oben). Der Stellmotor 35 erhält Steuersignale von einer elektronischen Steuereinrichtung 73, die ihrerseits hier von einem ersten Sensor 74, nämlich einen Volumenstromsensor, und einem zweiten Sensor 75, nämlich einen Feuchtesensor 75, Messsignale erhält. Der Ablauf 3 des Anschlussstücks führt über den ersten Sensor 74 zu der nachfolgenden Wasserinstallation 79.

Die nachfolgende Wasserinstallation umfasst hier den zentral wirkenden Wasserfilter 76 und eine Verzweigung auf mehrere Steigleitungen 77a-77c, die hier jeweils Absperrhähne 78a-78c aufweisen. Die Steigleitungen 77a-77c führen in die verschiedenen Stockwerke des Gebäudes und versorgen dort Wasserverbraucher, z.B. Zapfhähne, Brunnen, Aquarien, Waschmaschinen oder Spülmaschinen (nicht näher dargestellt).

Falls es in der nachfolgenden Wasserinstallation 79 zu einem Rohrbruch kommen sollte, führt das zu einem plötzlich auftretenden, sehr großen Durchfluss am ersten Sensor 74. Die elektronische Steuereinrichtung 73 erkennt durch Überschreiten eines vordefinierten Grenzwerts für das Messsignal des ersten Sensors 74 den Schadensfall, und veranlasst die Absperrung des Ventils 31 mittels des Stellmotors 35. Auch im Falle einer sehr lange dauernden, ununterbrochenen Wasserentnahme (entsprechend einem vergessenen, offenstehenden Wasserhahn) kann eine Absperrung durch die Wasserschadenschutzvorrichtung 1 in analoger Weise erfolgen; der Schadensfall wird hier durch Überschreiten eines vorgegebenen Grenzwerts für die Zeitdauer einer ununterbrochenen Wasserentnahme, wie sie vom ersten Sensor 74 gemeldet wird, erkannt.

Falls es zu einem (kleineren) Leck am Wasserfilter 76 kommen sollte, so tropft austretendes Wasser in eine am Boden angeordnete Wanne 80 (auch bezeichnet als Auffangwanne). Der in der Wanne am Wannenboden liegende zweite Sensor 75 reagiert auf die Feuchtigkeit. Die elektronische Steuereinheit 73 erkennt, dass die Messsignale des Feuchtesensors 75, die einen elektrischen Widerstand zwischen zwei Messelektroden repräsentieren, einen vordefinierten Grenzwert unterschreiten. Auch dann veranlasst die elektronische Steuereinrichtung 73 durch entsprechende Steuersignale ein Schließen des Ventils 31 durch den Stellmotor 35.

Wenn in einem Notfall, beispielsweise bei einem Gebäudebrand, die Wasserschadenschutzvorrichtung 1 eine Schließung des Ventils 31 veranlasst hat, beispielsweise weil es zu einem größeren Leck im Bereich der Steigleitung 77a in einem oberen Gebäudeteil, gekommen ist, und nun in Folge des Brands der elektrische Strom ausgefallen ist, kann das Ventil 31 auf einfache Weise über das manuelle Stellorgan 6 geöffnet werden. Dann kann beispielsweise über die verbliebenen, unbeschädigten Steigleitungen 77b, 77c Löschwasser im Gebäude zur Verfügung gestellt werden. Nötigenfalls kann dafür der Absperrhahn 78a der Steigleitung 77a geschlossen werden, um den Wasserdruck hoch zu halten.

Zusammenfassend betrifft die Erfindung eine Wasserschadenschutzvorrichtung (1) zum automatischen Verschließen einer Leitung, umfassend

- ein Anschlussstück (30) mit einem Zulauf (2), einem Ablauf (3) und einem Ventil (31) mit einem drehbaren Verschlussteil (32; 60),
- einen Stellmotor (35), mit dem das drehbare Verschlussteil (32; 60) drehbar ist,
- eine elektronische Steuereinrichtung (73), die in Abhängigkeit von Messsignalen wenigstens eines Sensors (74, 75) Steuersignale für den Stellmotor (35) erzeugt, die dadurch gekennzeichnet ist,

dass die Wasserschadenschutzvorrichtung (1) weiterhin ein manuelles Stellorgan (6) zum manuellen Drehen des Verschlussteils (32; 60) umfasst,

dass eine Stellmotorwelle (11) über eine Kopplungsvorrichtung (10; 40) mit einer Verschlussteilwelle (9) gekoppelt ist,

wobei die Kopplungsvorrichtung (10; 40) so ausgebildet ist, dass bei Drehung der der Stellmotorwelle (11) in eine erste Drehrichtung (ED) die Stellmotorwelle (11) mittels wenigstens eines ersten Anschlags (38a, 38b) formschlüssig mit der Verschlussteilwelle (9) koppelt und die Verschlussteilwelle (9) in die erste Drehrichtung (ED) mitnimmt,

und wobei die Kopplungsvorrichtung (10; 40) weiterhin so ausgebildet ist, dass ausgehend von dem wenigstens einen ersten Anschlag (38a, 38b) die Verschlussteilwelle (9) in der ersten Drehrichtung (ED) zumindest über einen Spielwinkelbereich S gegenüber der Stellmotorwelle (11) drehbar ist. Mit der Wasserschadenschutzvorrichtung kann im Notfall ohne Stromversorgung ein geschlossenes Ventil einfach, schnell und sicher geöffnet werden.

Bezugszeichenliste

| | |
|---|---|
| 1 | Wasserschadenschutzvorrichtung |
| 2 | Zulauf |
| 3 | Rücklauf |
| 4 | Ventilkugel |
| 6 | manuelles Stellorgan |
| 7 | Stellorganspindel |
| 8 | Handrad |
| 9 | Verschlussteilwelle |
| 10 | Kopplungsvorrichtung (mit Vorsprüngen/Rücksprüngen) |
| 11 | Stellmotorwelle |
| 12 | motorseitiger Träger |
| 13a-13d | Mitnehmer |
| 14a-14b | Auskragungen |
| 15 | ventilseitiger Träger |
| 30 | Anschlussstück |
| 31 | Ventil |
| 32 | Verschlussteil (mit Ventilkugel) |
| 33 | zentraler Durchgangskanal |
| 34 | Drehbetätiger |
| 35 | Stellmotor |
| 36a-36d | Vorsprünge |
| 37a-37b | Rücksprünge |
| 38a | erster Anschlag |
| 38b | weiterer erster Anschlag |
| 39a | zweiter Anschlag |
| 39b | weiterer zweiter Anschlag |
| 40 | Kopplungsvorrichtung (mit Freilauf) |
| 41 | Freilauf (Freilaufkupplung) |
| 42 | Verzahnung |
| 42a | Zahnlücke |
| 43 | Rohrschaft |
| 44 | Sperrklinke |
| 44a | Spitze der Sperrklinke |

| | |
|---|---|
| 51 | erstes Zahnrad |
| 52 | zweites Zahnrad |
| 53 | Zahnradgetriebe |
| 60 | Verschlussteil (mit Verschlussscheibe) |
| 61 | Verschlussscheibe |
| 62 | dezentraler Durchgangskanal |
| 63 | Gegenöffnung |
| 70 | Übergabeleitung |
| 71 | Haupthahn |
| 72 | Wasseruhr |
| 73 | elektronische Steuereinrichtung |
| 74 | erster Sensor (Volumenstromsensor) |
| 75 | zweiter Sensor (Feuchtesensor) |
| 76 | Wasserfilter |
| 77a-77c | Steigleitungen |
| 78a-78c | Absperrhähne |
| 79 | nachfolgende Wasserinstallation |
| 80 | Wanne |
| DA | Drehachse |
| ED | erste Drehrichtung |
| S | Spielwinkelbereich |
| SA | Stellorganachse |
| ZD | zweite Drehrichtung |

**Patentansprüche**

1. Wasserschadenschutzvorrichtung (1) zum automatischen Verschließen einer Leitung für den Transport eines flüssigen Mediums, umfassend

    - ein Anschlussstück (30) mit einem Zulauf (2), einem Ablauf (3) und einem Ventil (31) mit einem drehbaren Verschlussteil (32; 60), wobei mit dem drehbaren Verschlussteil (32; 60) eine Verbindung zwischen dem Zulauf (2) und dem Ablauf (3) für das flüssige Medium geöffnet und geschlossen werden kann,
    - einen Stellmotor (35), mit dem das drehbare Verschlussteil (32; 60) in Abhängigkeit von Steuersignalen motorisch drehbar ist,
    - eine elektronische Steuereinrichtung (73), die in Abhängigkeit von Messsignalen wenigstens eines Sensors (74, 75) Steuersignale für den Stellmotor (35) erzeugt,

    **dadurch gekennzeichnet,**

    **dass** die Wasserschadenschutzvorrichtung (1) weiterhin ein manuelles Stellorgan (6) zum manuellen Drehen des Verschlusrteils (32; 60) umfasst,
    **dass** eine Welle des Stellmotors (35), im Folgenden Stellmotorwelle (11) genannt, über eine Kopplungsvorrichtung (10; 40) mit einer Welle des Verschlussteils (32; 60), im Folgenden Verschlussteilwelle (9) genannt, gekoppelt ist,
    wobei die Kopplungsvorrichtung (10; 40) so ausgebildet ist, dass bei Drehung der der Stellmotorwelle (11) in eine erste Drehrichtung (ED) die Stellmotorwelle (11) mittels wenigstens eines ersten Anschlags (38a, 38b) formschlüssig mit der Verschlussteilwelle (9) koppelt und die Verschlussteilwelle (9) in die erste Drehrichtung (ED) mitnimmt,

und wobei die Kopplungsvorrichtung (10; 40) weiterhin so ausgebildet ist, dass ausgehend von dem wenigstens einen ersten Anschlag (38a, 38b) die Verschlussteilwelle (9) in der ersten Drehrichtung (ED) zumindest über einen Spielwinkelbereich S gegenüber der Stellmotorwelle (11) drehbar ist, und dass der Spielwinkelbereich S so bemessen ist, dass das Ventil (31) mittels des manuellen Stellorgans (6) von einem vollständig geschlossen Zustand in einen zumindest teilweise geöffneten Zustand überführt werden kann.

2. Wasserschadenschutzvorrichtung (1) nach Anspruch 1, **dadurch gekennzeichnet,**

   **dass** die Kopplungsvorrichtung (10) einen motorseitigen Träger (12), der mit der Stellmotorwelle (11) starr verbunden ist, und einen ventilseitigen Träger (15), der mit der Verschlussteilwelle (9) starr verbunden ist, aufweist,

   **dass** an einem der Träger (12, 15) wenigstens ein radialer oder axialer Vorsprung (36a-36d) und am anderen der Träger (12, 15) wenigstens ein radialer oder axialer Rücksprung (37a-37b) ausgebildet ist, die ineinander greifen und dadurch den wenigstens einen ersten Anschlag (38a-38b) sowie wenigstens einen zweiten Anschlag (39a-39b) ausbilden, wobei durch den wenigstens einen ersten Anschlag (38a-38b) und den wenigstens einen zweiten Anschlag (39a-39b) der Spielwinkelbereich S eingerichtet ist.

3. Wasserschadenschutzvorrichtung (1) nach Anspruch 2, **dadurch gekennzeichnet, dass** an einem der Träger (12, 15) wenigstens zwei Vorsprünge (36a-36d) und am anderen der Träger (12, 15) wenigstens zwei Rücksprünge (37a-37b) ausgebildet sind, die ineinander greifen.

4. Wasserschadenschutzvorrichtung (1) nach Anspruch 2 oder 3, **dadurch gekennzeichnet, dass** die Vorsprünge (36a-36d) und/oder Rücksprünge (37a-37b) als axiale Vorsprünge (36a-36d) und/oder Rücksprünge (37a-37b) ausgebildet sind.

5. Wasserschadenschutzvorrichtung (1) nach Anspruch 1, **dadurch gekennzeichnet, dass** die Kopplungsvorrichtung (40) mit einem Freilauf (41) ausgebildet ist, der bei einer Drehung der Stellmotorwelle (11) durch den Stellmotor (35) in die erste Drehrichtung (ED) koppelt, und bei einer Drehung der Verschlussteilwelle (9) mittels des manuellen Stellorgans (6) in der ersten Drehrichtung (ED) freiläuft.

6. Wasserschadenschutzvorrichtung (1) nach einem der Ansprüche 1 bis 5, **dadurch gekennzeichnet, dass** der Stellmotor (35) und das manuelle Stellorgan (6) an gegenüberliegenden Seiten des Anschlussstücks (30) am Verschlussteil (32; 60) angreifen.

7. Wasserschadenschutzvorrichtung (1) nach einem der Ansprüche 1 bis 5, **dadurch gekennzeichnet, dass** der Stellmotor (35) und das manuelle Stellorgan (6) an der gleichen Seite des Anschlussstücks (30) am Verschlussteil (32; 60) angreifen, insbesondere wobei der Stellmotor (35) und das manuelle Stellorgan (6) beide an der Verschlussteilwelle (9) angreifen.

8. Wasserschadenschutzvorrichtung (1) nach Anspruch 7, **dadurch gekennzeichnet, dass** das manuelle Stellorgan (6) eine Stellorganspindel (7) aufweist, die über ein Zahnradgetriebe (53), insbesondere ein Stirnradgetriebe, mit der Verschlussteilwelle (9) gekoppelt ist.

9. Wasserschadenschutzvorrichtung (1) nach einem der vorhergehenden Ansprüche, **dadurch gekennzeichnet, dass** das manuelle Stellorgan (6) starr oder im Wesentlichen spielfrei mit dem Verschlussteil (32; 60) gekoppelt ist.

10. Wasserschadenschutzvorrichtung (1) nach einem der vorhergehenden Ansprüche, **dadurch gekennzeichnet, dass** durch die Kopplungsvorrichtung (10; 40) der Spielwinkelbereich S eingerichtet ist mit

$$0{,}5 * \alpha < S < 1{,}5 * \alpha,$$

mit Öffnungswinkel $\alpha$ des Verschlussteils, wobei der Öffnungswinkel einen Drehwinkel des Verschlussteils (32; 60) entspricht, mit dem das Ventil (31) von einem vollständig geschlossenen Zustand in einen vollständig geöffneten Zustand überführt werden kann.

11. Wasserschadenschutzvorrichtung (1) nach Anspruch 10, **dadurch gekennzeichnet,**

    **dass** das Verschlussteil (32) ausgebildet ist mit einer Ventilkugel (4) mit einem zentralen Durchgangskanal (33),
    und **dass** $45° \leq S \leq 135°$,
    insbesondere wobei $80° \leq S \leq 100°$.

12. Wasserschadenschutzvorrichtung (1) nach Anspruch 10, **dadurch gekennzeichnet,**

    **dass** das Verschlussteil (60) ausgebildet ist mit einer Verschlussscheibe (61) oder einem Verschlusszylinder mit einem dezentralem Durchgangskanal (62),
    und **dass** 90°≤S≤270°,
    insbesondere wobei 165°≤S≤195°.

13. Wasserschadenschutzvorrichtung (1) nach einem der vorhergehenden Ansprüche, **dadurch gekennzeichnet, dass** das manuelle Stellorgan (6) eine Stellorganspindel (7) mit einem Drehbetätiger (34), insbesondere einem Handrad (8) oder Handhebel, umfasst, wobei der Drehbetätiger (34) außerhalb eines Gehäuses der Wasserschadenschutzvorrichtung (1) angeordnet ist.

14. Wasserschadenschutzvorrichtung (1) nach einem der vorhergehenden Ansprüche, **dadurch gekennzeichnet,**

    **dass** der Sensor (74, 75) einen Volumenstromsensor (74), der einen Volumenstrom des flüssigen Mediums durch das Anschlussstück (30) misst, und/oder einen Feuchtigkeitssensor (75) umfasst,
    und **dass** die Steuereinrichtung (73) im Falle eines Überschreiten oder Unterschreitens eines vorgegebenen Grenzwerts für das Messsignal des Sensors (74, 75) das Ventil (31) schließt, insbesondere wobei die Steuereinrichtung (73) das Ventil (31) schließt, wenn eine elektrische Leitfähigkeit in der Umgebung des Sensors (75) einen Grenzwert überschreitet und/oder oder der elektrische Widerstand in der Umgebung des Sensors (75) einen Grenzwert unterschreitet und/oder ein absoluter momentaner Volumenstrom des flüssigen Mediums einen Grenzwert überschreitet und/oder eine Zeitdauer eines ununterbrochenen Mindestvolumenstroms des flüssigen Mediums einen Grenzwert überschreitet und/oder ein akkumuliertes Volumen des flüssigen Mediums innerhalb eines vorgegebenen Zeitraums einen Grenzwert überschreitet.

15. Verfahren zum Betrieb einer Wasserschadenschutzvorrichtung (1) nach einem der vorhergehenden Ansprüche, **dadurch gekennzeichnet, dass** nachdem die Steuereinrichtung (73) aufgrund von Messsignalen des Sensors (74, 75) ein Schließen des Ventils (31) durch den Stellmotor (35) durchgeführt hat, wobei der Stellmotor (35) mittels der Kopplungsvorrichtung (10) das Verschlussteil (32; 60) in die erste Drehrichtung (ED) gedreht hat, das Ventil (31) wieder manuell geöffnet wird, indem mit dem manuellen Stellorgan (6) das Verschlussteil (32; 60) in die erste Drehrichtung (ED) weitergedreht wird, wobei die Stellmotorwelle (11) und die Verschlussteilwelle (9) über die Kopplungsvorrichtung (10; 40) gekoppelt bleiben und die Stellmotorwelle (11) stillsteht.

Fig. 1

11 DA

14a 14b

12

10

15

13a/
36a

13b/
36b

37a

Fig. 2

12

13a/
36a

13b/
36b

13c/
36c

13d/
36d

Fig. 3

37b

14a 14b

15

9

37a

DA

Fig. 4

Fig. 5

Fig. 6

Fig. 7

Fig. 8

Fig. 9

Fig. 10

**EUROPÄISCHER RECHERCHENBERICHT**

Europäisches Patentamt
European Patent Office
Office européen des brevets

Nummer der Anmeldung

EP 24 18 7584

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 2023/099897 A1 (KOPVA LTD [GB]) 8. Juni 2023 (2023-06-08) * Abbildungen 1-6 * * Seite 8, Zeile 21 - Seite 11, Zeile 22 * ----- | 1-15 | INV. F16K31/04 F16K31/05 F16K37/00 |
| A | US 9 671 031 B2 (BEN OLD MORDECHAI [IL]) 6. Juni 2017 (2017-06-06) * Abbildung 4 * * Spalte 2, Zeile 31 - Spalte 4, Zeile 17 * ----- | 1-4,14, 15 | |
| A | KR 2007 0090702 A (KOTECT CO LTD [KR]) 6. September 2007 (2007-09-06) * Abbildungen 1-4 * ----- | 1,5,7,8, 15 | |
| A | CN 112 145 711 A (GE YUZHEN) 29. Dezember 2020 (2020-12-29) * Abbildungen * ----- | 1,5,7,8, 15 | |
| A | DE 10 2005 028374 A1 (BOSCH GMBH ROBERT [DE]) 21. Dezember 2006 (2006-12-21) * Abbildungen 1, 2, 4 * ----- | 1,7,8 | |
| A | US 2007/289635 A1 (GHAZARIAN JOHN D [US] ET AL) 20. Dezember 2007 (2007-12-20) * Abbildung 2B * * Absatz [0013] * * Absatz [0055] - Absatz [0058] * ----- | 1,6,14 | |

RECHERCHIERTE SACHGEBIETE (IPC)

F16K

Der vorliegende Recherchenbericht wurde für alle Patentansprüche erstellt

| Recherchenort | Abschlußdatum der Recherche | Prüfer |
|---|---|---|
| Den Haag | 27. November 2024 | Silea, Cristian |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 24 18 7584

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

27-11-2024

| Im Recherchenbericht angeführtes Patentdokument | Datum der Veröffentlichung | Mitglied(er) der Patentfamilie | Datum der Veröffentlichung |
|---|---|---|---|
| WO 2023099897 A1 | 08-06-2023 | EP 4441406 A1 | 09-10-2024 |
| | | GB 2615394 A | 09-08-2023 |
| | | WO 2023099897 A1 | 08-06-2023 |
| US 9671031 B2 | 06-06-2017 | KEINE | |
| KR 20070090702 A | 06-09-2007 | KEINE | |
| CN 112145711 A | 29-12-2020 | KEINE | |
| DE 102005028374 A1 | 21-12-2006 | DE 102005028374 A1 | 21-12-2006 |
| | | JP 2007002846 A | 11-01-2007 |
| US 2007289635 A1 | 20-12-2007 | US 2007289635 A1 | 20-12-2007 |
| | | WO 2009017512 A1 | 05-02-2009 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3786603 B1
- EP 3848690 B1
- DE 202022104097 U1

**In der Beschreibung aufgeführte Nicht-Patentliteratur**

- Bedienung und Wartung SafeTech Connect Leckageschutz - SYR Haustechnik mit System. Hans Sasserath GmbH & Co. KG, 19 June 2019
- Sicherheitseinrichtung protectliQ:A Betriebsanleitung. Grünbeck Wasseraufbereitung GmbH, May 2022